Europäisches Patentamt

(19) European Patent Office

Office européen des brevets

(11) Publication number: **0 247 655**
A1

(12) **EUROPEAN PATENT APPLICATION**

(21) Application number: 87200805.7

(22) Date of filing: 28.04.87

(51) Int. Cl.⁴: **G 02 B 6/44**

(30) Priority: **06.05.86 NL 8601149**

(43) Date of publication of application: **02.12.87**
**Bulletin 87/49**

(84) Designated Contracting States: **DE FR GB IT NL**

(71) Applicant: **NKF KABEL B.V., Noordkade 64 Postbus 85, NL-2740 AB Waddinxveen (NL)**

(72) Inventor: **Huijsman, Dirk Cornelis, Lellevaart 48, NL-2724 SE Zoetermeer (NL)**

(74) Representative: **van der Beek, George Frans et al, Nederlandsch Octrooibureau Johan de Wittlaan 15 P.O. Box 29720, NL-2502 LS 's-Gravenhage (NL)**

(54) **Manufacture of a longitudinally watertight optical cable.**

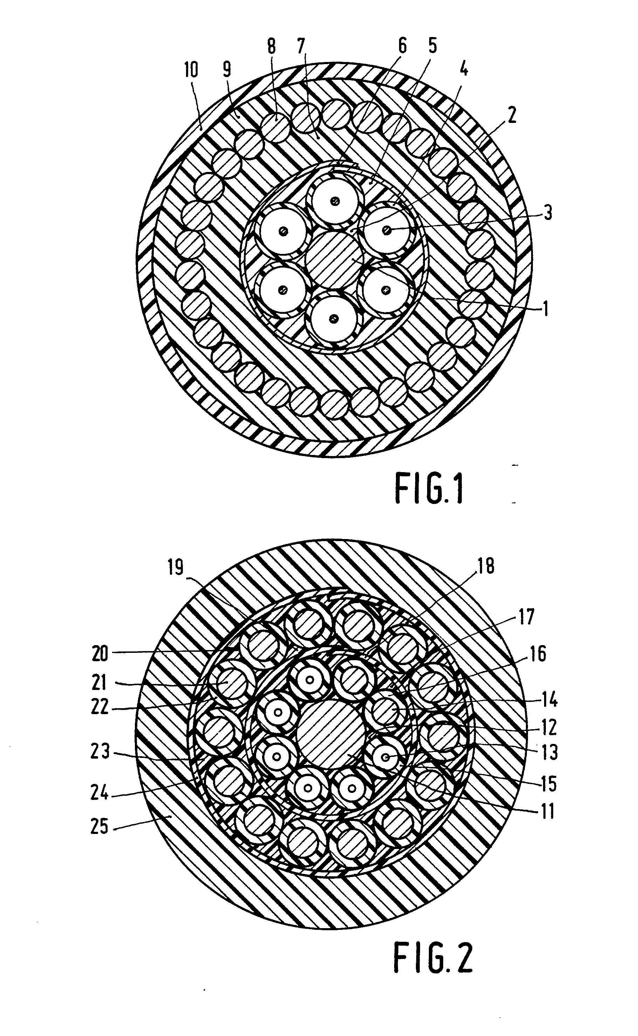

(57)     A method of manufacturing a longitudinally watertight optical cable as shown in Figure 1 in which a reinforcing core 1 is provided throughout its length with a thin layer 2 of a hot melt, a number of optical fibres 3 each comprising a primary coating and each enclosed within a loose secondary coating are twisted together over the layer of hot melt, a quantity of hot melt 5 is provided periodically on the secondary coating of the optical fibres, a foil 6 is provided over the resulting assembly and a synthetic resin sheath 7 is then provided by means of an extrusion process.

Method of manufacturing a longitudinally watertight optical cable.

The invention relates to a method of manufacturing a longitudinally watertight optical cable.

It is known to make cables, in particular telecommunication cables, for example, telephony cables, longitudinally watertight by filling the cable with a viscous or waxy substance, for example, known by the name of petrol jelly. Oils are also used, for example, aromatic and/or aliphatic hydrocarbons which may comprise thickening agents, for example, finely divided silicon dioxide or fibrous material, for example glass fibre or asbestos fibres. Other materials used for this purpose are paraffins or materials which swell under the influence of admitted water, for example, bentonite, dextrine or cellulose derivatives. The substances swelling in water are also provided in block, i.e. at mutually equal distances viewed in the longitudinal direction of the cable.

The disadvantage of filling the cable with oils or waxy materials is that the cable becomes considerably less flexible. Moreover, the cable becomes much heavier, which reduces the handlability. Another disadvantage is that the joining of the cable to, for example, an electric connector, sleeve, termination and the like is a difficult and unpleasant process.

The disadvantage of the use of a water-swelling substance is that when water is admitted an undefined and uncontrolled pressure build-up takes place. In the case of an optical cable this easily leads to a pressure on the optical fibres which results in a strong signal reduction.

The use of a filler which is impervious to water is also known in optical cables. British Patent Specification 1,445,732, for example, describes the use of petrol jelly which has the disadvantages mentioned hereinbefore. German Auslegeschrift 2,728,642 describes an optical cable in which the interstice between the fibre and the loose secondary coating is provided with a weakly cross-linking substance, for example, a weakly cross-linking silicone resin, polyester resin or polyurethane resin.

According to British Patent Application 2,046,471 a filling of a thixotropic oil consisting of silicone oil which comprises finely divided silicate is provided inside the loose secondary coating. The two last-mentioned publications relate to the filling of the secondary coating so that the cable of the cable element is watertight only between the fibre and the loose secondary coating.

It is the object of the invention to provide a method of manufacturing a longitudinally watertight optical cable in which the above-mentioned disadvantages do not occur.

According to one object of the invention a cable is manufactured which is entirely longitudinal watertight, *i.e.* over the whole cross-section of the cable.

Another object is to manufacture a cable which is comparatively light in weight, can easily be handled and in particular is flexible.

Still another object is to provide a method which enables a high production rate and moreover has a number of process steps which can be performed both in an uninterrupted continuous process and in an interrupted discontinuous process, whereby the flexibility of the procedure is extended.

Another object is to manufacture an optical cable which can be connected electrically in a simpler manner to, for example, terminators, connecting sleeves and the like without it being necessary to remove a filling.

According to the invention these objects are achieved by means of a method of manufacturing a longitudinally watertight optical cable in which a reinforcing core is provided throughout its length with a thin layer of a hot melt, a number of optical fibres each comprising a primary coating and each enclosed within a loose secondary coating are twisted together over the layer of hot melt, a quantity of hot melt is provided periodically on the secondary coating of the optical fibres, a foil is provided over the resulting assembly and subsequently a synthetic resin sheath is provided by means of an extrusion process.

The reinforcing core used in the method according to the invention is preferably manufactured from metal and comprises in particular a steel wire or a number of steel wires twisted together. The reinforcing core may also be manufactured from a synthetic resin comprising reinforcing fibres, for example, glass fibres or polyaramide fibres. Each optical fibre comprises a protective layer of synthetic resin provided on the surface, the so-called primary coating. One or more optical fibres are enclosed within the loose secondary coating mentioned hereinbefore, which is a synthetic resin sheath or a synthetic resin tube the inside diameter of which exceeds the outside diameter of the optical fibre so that the fibre or fibres is or are movable within the secondary coating. The interstice inside this secondary coating preferably contains a filler which comprises, for example, a paraffin oil in which very fine $SiO_2$ particles are distributed.

The hot melt used is a known commercially available product. The hot melt is a synthetic resin composition, for example, a copolymer of ethene vinyl acetate which is provided in a liquid form at elevated temperature. Upon cooling, the hot melt solidifies and then has a bonding (adhering) capacity.

The foil used in the method according to the invention is, for example, a synthetic resin foil, such as a polyester foil.

In a preferred form of the method a metal foil, in particular an aluminium foil, is used in the form of a tape which is wound around the assembly of core, loose secondary coating and hot melt and which, at least on its surface facing the synthetic resin sheath, comprises a layer of synthetic resin which upon providing the sheath melts therewith.

In a further favourable embodiment of the method according to the invention one or more insulated electric conductors together with optical fibres each comprising a primary coating and each enclosed within a loose secunary coating are twisted over the core comprising the hot melt. The insulated electric conductors preferably have the same diametrical dimension as the loose secundary coating comprising fibres (optical fibres).

According to the method of the invention the hot melt, i.e the sealing material, is provided in two steps. In the first step the reinforcing core is provided with a thin layer of the hot melt throughout its length. Hereby the interstices which are difficult of access between the reinforcing core and the fibres with secondary coatings twisted around the core are filled from the inside, i.e from the reinforcing core, with hot melt. The thickness of the layer of hot melt is small and such that after twisting the fibres with secondary coatings the hot melt does not project beyond the circumferential surface of the coatings. Hereby the intermediate product (assembly) of the reinforcing core, hot melt and twisted fibres comprising secundary coatings can easily be transported and stored on reels. It follows that the process according to the invention may be performed as a discontinous, hence interrupted, process, if so desired. In the case of a thicker layer of hot melt in which the outside of the secundary coatings is not entirely free from hot melt, the intermediate product cannot be wound because the turns will start sticking together which results in a solid unwork bundle.

The fibres (optical fibres) with their secondary coating may be fixed on the reinforcing core comprising the hot melt in any desired configuration. For example, the coating with fibres may be provided in the form of a spiral or in an SZ configuration. The last-mentioned configuration can be described as a spiral form with alternating directions of rotation and has the form of a bent sine curve. It is to be noted that a bonding of secondary coatings with a reinforcing core comprising a flexible glue is known as such from Netherlands Patent Application No. 8200126 (PHK 142) in the name of the Applicants.

As stated hereinbefore, according to the process of the invention the sealing agent, i.e the hot melt, is provided in two process steps. After the first process step described hereinbefore the second process step is carried out. In this step a quantity of hot melt is provided periodically on the layer of the fixed optical fibres with secundary coatings twisted together around the core and a foil is then wrapped around the assembly. The periodic deposition of hot melt involves providing along a quantity of hot melt at intervals of, for example, 1-4 m. The periodically provided deposit of hot melt is hereinafter also termed a sealing block. The length of the sealing block may be varied at will and is, for example, from 1-20 cm, for example 10 cm.

At the area of a sealing block the hot melt provided on the secondary coating is bonded to the hot melt of the core so that a perfect water seal is achieved throughout the cross-section of the cable. Moreover, the synthetic resin sheath extruded over the foil is rigidly bonded to the core at the area of a sealing block. As a result of the many sealing blocks, the synthetic resin sheath and core are fixed with respect to each other and cannot move relative to each other when, for example, tension is applied either to the sheath or to the core.

In a simple embodiment of the method according to the invention a synthetic resin sheath is extruded directly on the foil which is provided over the assembly.

It is also possible to provide a second layer of conductors over the foil in the same manner as the first layer of conductors has been provided over the reinforcing core. Over the second layer again a foil and finally an extruded synthetic resin sheath is provided. More particularly, this favourable embodiment of the method in accordance with the invention is characterized in that, after providing the foil over the assembly, the said foil is provided throughout its length with a thin layer of the hot melt, a number of conductors are twisted together over the layer of hot melt, a quantity of the hot melt is periodically provided on the conductors, a second foil is provided over the assembly and subsequently a synthetic resin sheath is provided by means of an extrusion process.

The conductors provided over the foil may be insulating electric conductors and/or optical fibres each enclosed within a loose secondary coating. The second foil preferably is a metal foil which comprises a synthetic resin layer which melts with the extruded synthetic resin sheath. The invention is not restricted to the embodiments described hereinbefore but should be interpreted in a wide sense. Further embodiments are deemed to form part of the invention, for example, an embodiment in which a third layer of conductors is provided on the second foil surrounded by a third foil and coated with a synthetic resin sheath. The optical cable manufactured according to the invention may furthermore be provided with extra protecting layers or armouring layers. For this purpose, by way of example, a layer of reinforcing fibres or bands is provided around the extruded synthetic resin sheath, for example, a layer of steel wires twisted together. This is coated with a synthetic resin coating of, for example, polyethylene which in turn may be provided with an outer sheath of a strong synthetic resin, for example, a layer of extruded polyamide (nylon skin).

Embodiments of the invention will now be described in greater detail, by way of example, with reference to the accompanying drawings, in which

Figure 1 is a cross-sectional view of an optical cable manufactured according to the invention;

Figure 2 is a cross-sectional view of a further embodiment of the manufactured cable, and;

Figure 3 shows diagrammatically the process according to the invention.

Reference numeral 1 in Figure 1 denotes a reinforcing core manufactured from a number of steel wires twisted together. The core has a diameter, for example, of 1.5 mm. A layer 2 of a hot melt is provided on the core. Six optical fibres 3 twisted together in the form of a spiral are provided over the core comprising the hot melt. Each optical fibre has a synthetic resin layer not shown which adheres to the glass surface, the so-called primary coating. Each optical fibre is enclosed within a loose synthetic resin coating 4, the so-called secondary coating, within which the fibre 3 can move freely. The diameter of the secondary coating is 1.5 mm. Layer 2 of hot melt fills the interstices between the core and the twisted optical fibres with secondary coating. A quantity of hot melt 5 is provided periodically over the secondary coating 4. An aluminium foil 6 is wound longitudinally with overlap over the resulting assembly (1-5). On its outwardly directed surface the foil 6 comprises a layer of synthetic resin not shown. As a result of providing foil 6 the hot melt deposit 5 is forced inwardly and forms one assembly with hot melt layer 2. A synthetic resin sheath 7 of, for example, polyethylene is extruded over the foil 6 and adheres to the synthetic resin layer of foil 6. The cable is further finished with a so-called armour formed by steel wires 8 twisted together, an extruded synthetic resin sheath 9 of, for example, polyethylene, and an outer sheath 10 of polyamide.

Reference numeral 11 in Figure 2 denotes a reinforcing core of steel wires twisted together having a diameter of 2.5 mm. The reinforcing core comprises a layer of hot melt 12 in a thickness of 0.1 to 0.2 mm over which six optical fibres 13 and two insulated electric conductors 14 are twisted together. Hot melt 12 fills the interstices between the core and the twisted conductors. The optical fibres 13 each comprise a primary coating, not shown, and a loose secondary coating 15 having a diameter of 1.5 mm. The electric conductors 14 are manufactured, for example, from a litze of twisted copper wires and provided with an insulating synthetic resin sheath 16 of, for example, polyethylene. The diameter of the conductors with insulating layers is 1.5 mm. At the area where a sealing block is to be provided in the cable - and this area is shown in the cross-sectional view of Figure 2 - a quantity of hot melt is provided on the secondary coating 15. A foil 18 which is wound with overlap is provided over the assembly. Upon providing the foil 18 a radial, inwardly directed force is exerted on the hot melt 17 so that this is bonded to the layer 12 of hot melt. A thin layer 19 of hot melt is provided on foil 18, for example, a polyester foil. Insulated electrical conductors 20 are twisted together over foil 18. Each insulated conductor comprises a copper core 21 and a synthetic resin insulation sheath 22. When the electric conductors 20 are twisted together the interstices between the foil and the conductors are filled with hot melt 19. A quantity of hot melt 23 is provided periodically on the insulated conductors 20. A metal foil 24 is wrapped with overlap over the conductors comprising the hot melt. The hot melt 23 melts with the layer 19 of hot melt. Finally a synthetic resin sheath 25 which adheres to a synthetic resin layer which is not shown and which is present on the foil 24 is extruded over foil 24.

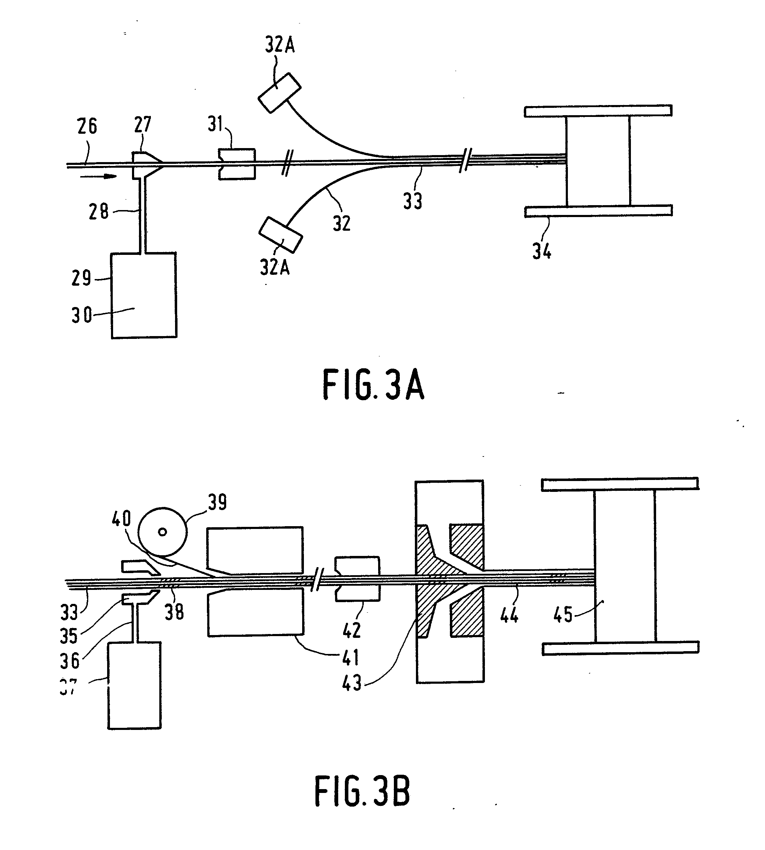

Reference numeral 26 in Figure 3A denotes a steel core which is moved in the direction of the arrow at a rate of 10 to 15 m per second. Core 26 travels through a dosing nipple 27 which communicates with reservoir 29 via a tube 28. Reservoir 29 comprises a hot melt 30. The reservoir together with tube 28 and nipple 27 is kept at a temperature of $120-140^0$C. The hot melt present in the nipple 27 is kept at a small excess pressure by a pumping device not shown. As a result of the passage of core 26 through dosing nipple 27 the core is provided with a thin layer of the hot melt in a thickness of approximately 0.1 to 0.2 mm throughout its length and all over its circumference. A uniform thickness is adjusted by means of the wipe-off nipple 31. After passing through the wipe-off nipple six optical fibres 32 having a loose secondary coating are twisted together around the core having a layer of hot melt. The optical fibres are unwound from the reels 32A and are twisted together in the form of a spiral over the core. For this purpose, reels 32A, two of which are shown in Figure 3, can be rotated about core 26. The hot melt present on the core has a temperature of approximately 25-40°C at the area where the optical fibres are wound on core 26. In the discontinuous manufacturing process shown in Figure 3A the resulting assembly 33 of core, hot melt and optical fibres is wound on reel 34 as an intermediate product. At any desired later time the intermediate product can be subjected to the further process steps which are shown diagrammatically in Figure 3B. It is also possible not to reel the assembly 33 but to directly continue the following process steps as shown in Figure 3B and to thus realize an uninterrupted manufacturing process.

According to the diagram of Figure 3B the assembly 33 is passed through a dosing nipple 35 which communicates via a steel pipe 36 with a hot melt reservoir 37. The hot melt present in the reservoir 37, pipe 36, and nipple 35 are kept at a temperature of 120-140°C. By means of a pressure pump, not shown, pressure surges are exerted on the hot melt present in the reservoir 37. With each pressure surge a quantity of hot melt 38 is deposited via nipple 35 on assembly 33. The frequency of the pressure surges is such that, viewed in the longitudinal direction of the cable, a hot melt deposit 38 is made at intervals of 1-4 m. Immediately after providing the hot melt deposit 38 an aluminium tape 40, unwound from a storage reel 39, is wound with overlap over the assembly 33 by means of the winding device 41. The surface of the aluminium tape remote from the assembly 33 is provided with a layer of synthetic resin not shown. The tape 40 is pressed on the assembly 33 by means of a pressure nipple 42. As a result of the winding and pressure of the tape a radial inwardly directed force is exerted on the hot melt. The length of the hot melt deposit after winding on the Al-tape is approximately 10 cm. Of course, any other length may be obtained by adjustment. The cable is then passed through an extruder 43 where it is provided with a synthetic resin sheath 44. Finally, the manufactured optical cable is wound on a reel 45. As stated hereinbefore, the manufactured cable may be provided, if so desired, with an armour according to conventional processes, for example, consisting of successively a layer of steel wires, a synthetic resin coating of polyethylene, and an outer sheath of polyamide.

1. A method of manufacturing a longitudinally watertight optical cable in which a reinforcing core is provided throughout its length with a thin layer of a hot melt, a number of optical fibres each comprising a primary coating and each enclosed within a loose secondary coating are twisted together over the layer of hot melt, a quantity of hot melt is provided periodically on the secondary coating of the optical fibres, a foil is provided over the resulting assembly and subsequently a synthetic resin sheath is provided by means of an extrusion process.

2. A method as claimed in Claim 1, characterized in that a metal foil is used in the form of a metal tape which is wound around the assembly and which on the surface facing the synthetic resin sheath comprises a layer of a synthetic resin which upon extruding the synthetic resin sheath melts herewith.

3. A method as claimed in Claim 1 or 2, characterized in that one or more insulated electric conductors together with optical fibres each comprising a primary coating and each enclosed within a loose secundary coating are twisted together over the layer of hot melt provided on the core.

4. A method as claimed in Claim 1, characterized in that, after providing the foil around the assembly, said foil is provided throughout its length with a thin layer of hot melt, a number of conductors are twisted together over the layer of hot melt, a quantity of the hot melt is provided periodically on the conductors, a second foil is provided on the assembly and a synthetic resin sheath is then provided by means of an extrusion process.

5. A longitudinally watertight optical cable comprising a reinforcing core carrying throughout its length a first thin layer of a hot melt, a second layer of optical fibres each comprising a primary coating and each enclosed within a loose secundary coating over said first layer, a quantity of hot melt deposited at intervals onto said second layer, a foil core over the assembly formed by core, first layer,

0247655

second layer and quantity of hot melt, and a synthetic resin sheath over said foil.

FIG.1

FIG.2

FIG.3A

FIG.3B

# European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 079 073  (SIEMENS)<br>* Page 2, lines 27-31; page 3, line 19 - page 4, line 36; page 5, lines 13-17; figures * | 1 | G 02 B    6/44 |
| A | | 2,4 | |
| X | EP-A-0 093 395  (SIEMENS)<br>* Claims 1,5,9,10; figures * | 1,5 | |
| A | | 4 | |
| A | EP-A-0 158 730  (SIEMENS)<br>* Claims 1,5,6,8 * | 1,2,4 | |
| A | US-A-4 199 224  (U. OESTREICH)<br>* Page 4, lines 31-61 * | 3 | **TECHNICAL FIELDS SEARCHED (Int. Cl.4)**<br><br>G 02 B    6/44 |
| A | US-A-4 143 942  (G.S. ANDERSON)<br>* Claims * | 1 | |
| A | US-A-4 153 332  (S. LONGONI)<br>* Claims * | 1 | |

The present search report has been drawn up for all claims

| Place of search | Date of completion of the search | Examiner |
|---|---|---|
| THE HAGUE | 20-08-1987 | PFAHLER R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82